(19) Europäisches Patentamt
European Patent Office
Office européen des brevets

(11) **EP 4 797 206 A1**

(12) **EUROPEAN PATENT APPLICATION**

(43) Date of publication:
**26.08.2026 Bulletin 2026/35**

(21) Application number: **25159717.5**

(22) Date of filing: **24.02.2025**

(51) International Patent Classification (IPC):
***G06T 7/50*** *(2017.01)* ***G06T 7/80*** *(2017.01)*

(52) Cooperative Patent Classification (CPC):
**G06T 7/50; G06T 7/80;** G06T 2207/10004; G06T 2207/20081; G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **TOYOTA JIDOSHA KABUSHIKI KAISHA**
  **Toyota-shi, Aichi-ken, 471-8571 (JP)**
- **ETH Zurich**
  **8092 Zürich (CH)**

(72) Inventors:
- **ABBELOOS, Wim**
  **1140 BRUSSELS (BE)**
- **PICCINELLI, Luigi**
  **8092 ZURICH (CH)**
- **SAKARIDIS, Christos**
  **8092 ZURICH (CH)**
- **SEGÙ, Mattia**
  **8092 ZURICH (CH)**
- **YANG, Yung-Hsu**
  **8092 ZURICH (CH)**
- **LI, Siyuan**
  **8092 ZURICH (CH)**
- **VAN GOOL, Luc**
  **8092 ZURICH (CH)**

(74) Representative: **Cabinet Beau de Loménie**
**103, rue de Grenelle**
**75340 Paris Cedex 07 (FR)**

Remarks:
Amended claims in accordance with Rule 137(2) EPC.

(54) **A METHOD FOR TRAINING A NEURAL NETWORK FOR GENERATING A REPRESENTATION OF A CAMERA**

(57) The invention relates to a computer implemented method for training a neural network for generating a representation of a camera the method comprising: inputting one image of a scene acquired by said camera to the neural network, said neural network being configured to determine an angular representation of a bundle of straight lines passing through an optical center of the camera, each straight line representing a viewing direction of a pixel of the camera.

100
10
$f_{cr}$
T
T-Enc
H
$\mathcal{F}_{\mathcal{B}}^{-1}\{\mathbf{H}\}$
C
$\mathcal{L}_A$
$I_1$
Enc
C
O
$f_{rad}$
T-Dec
D
UpSamp
R
$\mathcal{L}_{rad}$
F
20

FIG. 3



Processed by Luminess, 75001 PARIS (FR)

## Description

BACKGROUND OF THE INVENTION

1. Field of the invention

The present disclosure is related to the field of computer vision. More precisely, the present disclosure relates to neural networks able to determine representation of the cameras used to acquire a scene and, based on this camera representation, a three-dimensional (3D) representation of a scene using only a single image of the scene as an input.

2. Description of Related Art

Monocular Depth Estimation (MDE) is the task of estimating a distance relative to a camera, or depth value, of each pixel given a single, or monocular, image acquired by the camera. This task is a prerequisite for applications such as 3D scene reconstruction, autonomous driving, and Augmented Reality (AR) or Virtual Reality (VR).

Some known MDE methods include supervised learning-based approaches, such as monocular depth prediction using deep convolutional neural networks (CNNs) trained on large datasets.

In order to predict the depth information of a scene from a single image, such an MDE method relies on a training model which understands the complex relationships between objects in the scene and the corresponding depth information, which can be affected by factors such as lighting conditions, occlusion, texture, etc.

While existing MDE methods prove to be accurate, they require training and testing on datasets consisting in images acquired by cameras having similar intrinsic parameters and scene scales. Moreover, the training datasets typically have a limited size and contain little diversity in scenes and cameras. Consequently, these characteristics result in poor generalization to real-world inference scenarios, where images are acquired by cameras having arbitrary intrinsic parameters in uncontrolled, arbitrarily structured environments.

Therefore, there is scope for improvement.

SUMMARY

The object of the present invention is to at least substantially remedy the above-mentioned drawbacks.

In this respect, the present disclosure relates to computer implemented method for training a neural network for generating a representation of a camera the method comprising:

inputting one image of a scene acquired by said camera to the neural network, said neural network being configured to determine an angular representation of a bundle of straight lines passing through an optical center of the camera, each straight line representing a viewing direction of a pixel of the camera.

Thanks to this training method, a neural network can predict based on an image of a given scene and on parameters pertaining to the pixels of said image of the scene a representation of the camera used to acquire this image. This representation of the camera corresponds to its intrinsic parameters. Intrinsic camera parameters usually include the scale factor, the focal length, the coordinates of the principal point, the skew and the geometric distortion of the camera and are estimated by performing a camera calibration procedure. Once the values of those parameters are obtained, they allow to project 3D points of the scene, which coordinates are expressed in the world coordinate system, onto the 2D image plane.

More particularly, based on a single image of a given scene, the trained neural network determines a representation of the camera, called angular representation, which is a representation of the pencil of rays of the camera. A pencil of rays of a camera is the bundle of straight lines, or rays, that originate from the optical center of the camera and pass through a pixel of the camera sensor. Thus, each ray of the camera represents a viewing direction of a pixel of the camera.

Contrary to existing works in which the intrinsic parameters of the camera, such as for example the focal length and the principal points, are predicted and then used during back-projection operation in order to obtain a representation of the pencil of rays of the camera, the present solution proposes to directly determine the angular representation of the camera from the input image.

In doing so, the solution of the invention enables the modelling of a wider variety of cameras and allows a more flexible and a more accurate depth prediction regardless of the intrinsic parameters of the camera used to acquire the image, be it a real camera or a virtual camera.

In particular implementations, the angular representation is obtained by applying an inverse spherical transform defined by a finite basis of spherical harmonics on data representative of said one image determined by the neural network.

Spherical harmonics are mathematical functions defined on the surface of a sphere. They arise naturally from solving certain types of differential equations in spherical coordinates, where they represent possible solutions that are

both radial and angular in nature.

Modeling the camera rays as a decomposition across a finite spherical harmonics basis ensures the generality and versatility of the 3D representation of the scene while maintaining an accurate and compact representation of the predicted pencil of rays.

In particular implementations, the angular representation C is defined as:

$$C = F_B^{-1}\{H\} = \sum_{l=0}^{L} \sum_{m=-l}^{l} H_{lm} B_{lm}(\theta, \phi)$$

where $F_B^{-1}$ denotes the inverse spherical transform using the spherical harmonics functions $B$, $H \in R^{H\times W\times 3}$ is a tensor where $H$ and $W$ are respectively the height and width said one image, and the last dimension correspond to the poles and an horizontal field of view of a spherical harmonic, $l$ is the degree of the spherical harmonics, m is the order of the spherical harmonics, $\theta$ is a value of a polar angle and $\phi$ is a value of an azimuthal angle in a spherical coordinate system centered on the optical center of the camera.

The spherical harmonics functions may be, for example, Legendre polynomials. Such spherical harmonics functions are, for example, defined by four parameters: the generalised principal point, which corresponds to the poles of a spherical harmonic, as well as its horizontal and vertical fields of view. Such a mathematical expression of the angular representation of the camera provides a compact description of the bundle of rays of the camera.

Another advantage of using spherical harmonics functions is that they require only 15 harmonics for a third-degree basis without the constant component, i.e. without the lowest-degree ($l$= 0) function, which is the simplest, constant spherical harmonic, and an equal number, i.e. 15, of coefficients to accurately represent intrinsics of most types of cameras.

Furthermore, by defining these spherical harmonics functions by means of the four above-mentioned parameters, the proposed solution not only achieves a robust and flexible framework that can handle a variety of camera geometries with only 19 parameters but also remains computationally efficient. In particular implementations, the method further comprises a determination of a three-dimensional (3D) representation of the scene based on:

said angular representation of the camera and,

a determination of a bundle of radial distances by the neural network from said angular representation of the camera and said one image, each radial distance separating an optical center of said camera from an intersection of a straight line of a bundle of straight lines passing through said optical center, each straight line representing a viewing direction of a pixel of said camera, and an object of the scene.

Thanks to this training method, a neural network can predict a 3D representation of a scene from a single image of said scene waiving the need for additional external information, such as camera intrinsic parameters, thus defining a universal MDE method capable of modelling a wide variety of cameras ranging from pinhole cameras to fisheye cameras or panoramic and wide-angle cameras. This is achieved by training the neural network using both a loss and a ground truth enabling the neural network to learn to directly determine a 3D spherical representation of the scene from a single image acquired by the camera.

The angular representation of the camera obtained by the neural network is then used, by said neural network, to determine camera-conditioned radial distances. These radial distances, computed for each ray of the camera, are the distances separating the optical center from an intersection of each ray of the bundle of rays and an object of the scene.

Using the predicted camera representation as an input for predicting camera-conditioned radial distances ensures that the dimensions of projected objects in the image vary univocally with the radial distance which is not the case with depth representation.

The 3D representation of the scene predicted by the neural network is the concatenation of the predicted angular representation of the camera and the camera-conditioned radial distances. As such, the 3D representation of the scene is a set of spherical coordinates: polar angle, azimuthal angle, and radial distance, i.e. ($\theta$, $\phi$, $r$), each triplet ($\theta$, $\phi$, r) of the set of spherical coordinates corresponding to a ray of the camera.

Such a fully spherical output representation supports various types of inverse projection problems which refer to a class of problems where the goal is to reconstruct or infer information about the original object or scene from its projected image(s).

Another advantage of the fully spherical output representation of the invention, is that it enables the decoupling of camera ($\theta$, $\phi$) and radial distance ($r$) components, ensuring their orthogonality by design, in contrast to the Cartesian representation ($x$, $y$, $z$) in which the components pertaining to the camera and depth components are entangled by design.

In other words, the present method ensures a complete disentanglement of projective *versus* 3D scene geometry, as the dimension of an object projection on the image is a univocal function only with regard to radial distance and not with regard to depth. This disentanglement allows more consistent 3D reconstructions and enhances the stability of 3D outputs near the (*x, y*) plane where depth approaches zero.

In particular implementations, the method further comprises minimizing a final loss which is a difference between said 3D representation of the scene and a ground truth 3D representation of the scene.

In particular implementations, the radial distances are determined by conditioning a dense feature map F, determined by the neural network from said one image, with said angular representation.

In particular implementations, when conditioning the dense feature map F, a static-encoding is applied to the angular representation.

In the present solution, the radial distances are determined by a cross-attention mechanism.

A cross-attention mechanism is a type of attention mechanism used in deep learning models to learn the relationship between two different sets of data. Unlike self-attention, which uses the same data for queries, keys, and values, cross-attention operates over two different data sources, where one is used for the queries and the other is used for the keys and values.

An attention mechanism computes a weighted sum of the values based on the similarity between the queries and the keys. These similarities are used to create attention scores that define how much focus, or weight, each value should receive in the final output. In a cross-attention setup, an attention score is computed between queries and keys from different sources. The attention score determines how much importance, or weight, should be given to the values from the key sequence when producing the output.

In the method of the invention, the dense feature map F is used to compute the *query* of this cross-attention mechanism while the static-encoded angular representation is used to compute both the *keys* and *values.*

More particularly, in the present solution, the output of the cross-attention mechanism is then passed through a pyramid decoder based on convolutions. In a pyramid decoder, the input of the decoder is unsampled two times at each stage such that the output of the pyramid decoder has the same size as the input image, i.e. *H* x *W.*

In particular implementations, determining the 3D representation of the scene comprises determining for the pixels of said one image, in a spherical coordinate system centered on the optical center of the camera, a polar angle $\theta$, an azimuthal angle $\phi$ and a radial distance r.

In particular implementations, determining the 3D representation of the scene comprises obtaining a 3D point cloud $O \in R^{H \times W \times 3}$ by converting the spherical coordinates of the pixels of said one image to Cartesian coordinates.

In particular implementations, the final loss is a linear combination of an angular loss $L_A$, a radial loss $L_{rad}$ and a confidence loss $L_{conf}$.

In particular implementations, the angular loss $L_A$ is defined as:

$$L_A(\hat{C}, C) = \beta L_{AA}^{0.7}(\hat{\theta}, \theta) + (1 - \beta) L_{AA}^{0.5}(\hat{\phi}, \phi)$$

where $(\hat{\cdot})$ and $(\cdot)$ represent respectively the values predicted by the neural network and the ground-truth values, and $\beta$ = 0.75.

In particular implementations, the radial loss $L_{rad}$ is defined as:

$$L_{rad} = \left\| \hat{R}_{log} - R_{log} \right\|_1$$

where $(\hat{\cdot})$ and $(\cdot)$ represent respectively the values predicted by the neural network and the ground-truth values.

In particular implementations, the confidence loss $L_{conf}$ is defined as:

$$L_{conf} = \left\| \left| \hat{R}_{log} - R_{log} \right| - \Sigma \right\|_1$$

where $(\hat{\cdot})$ and $(\cdot)$ represent respectively the values predicted by the neural network and the ground-truth values and $\Sigma$ is the inverse predicted confidence.

According to a second aspect, the present invention concerns a neural network trained by the method according to the invention.

According to a third aspect, the present invention concerns a system for training a neural network for generating a representation of a camera, the system comprising:

- a neural network being configured to:

- obtain one image of the scene acquired by a camera;
- determine an angular representation, determined by the neural network from said one image, of a bundle of straight lines passing through an optical center of the camera, each straight line representing a viewing direction of a pixel of the camera.

In particular implementations, the system comprises the neural network according to the invention.

According to a fourth aspect, the present invention concerns a vehicle comprising the system according to the invention.

Embodiments of the present invention also extend to programs which, when run on a computer or processor, cause the computer or processor to carry out the method described above or which, when loaded into a programmable device, cause that device to become the device described above. The program may be provided by itself or carried by a carrier medium. The carrier medium may be a storage or recording medium, or it may be a transmission medium such as a signal. A program embodying the present invention may be transitory or non-transitory.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

Figure 1 depicts for illustrative purposes a data flow diagram of a training method according to a particular implementation of the invention;

Figure 2 illustrates a particular implementation of a system 1000 according to the invention;

Figure 3 illustrates an example of the architecture of a neural network of the system illustrated by Figure 2;

Figure 4 an example of the hardware architecture of the system illustrated by Figure 2; and

Figure 5 is a flowchart of a training method according to a particular implementation of the invention.

DETAILED DESCRIPTION OF EMBODIMENTS

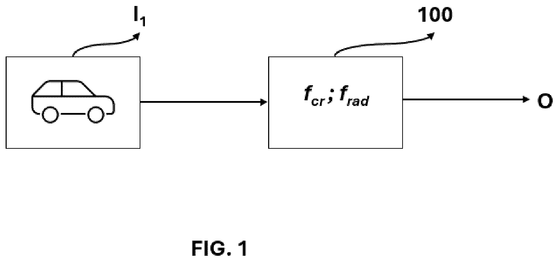

**Figure 1** depicts for illustrative purposes a data flow diagram of a training method according to a particular implementation of the invention.

The invention remains applicable whatever the nature of the neural network considered (convolutional, perceptron, auto-encoder, recurrent, etc.), in particular for any deep neural network.

As illustrated by Figure 1, the data flow diagram comprises a step of inputting a first image $I_1$ of a scene to a neural network 100 implementing a first function $f_{cr}$ that determines a representation C of a camera Cam used to acquire the first image $I_1$, and a second function $f_{rad}$ that determines camera-conditioned radial distance R of the objects of the scene based on the representation C of the camera Cam. The camera Cam used to acquire the image $I_1$ may be a real camera, such as a camera embedded in a smartphone or a virtual camera. More particularly, the camera Cam may be any type of camera such as a pinhole camera, a fisheye camera, a panoramic camera, etc.

The representation C of the camera Cam is a tensor of dimensions $H \times W \times 2$ where H and $W$ are respectively the height and width of the image $I_1$ acquired by the camera Cam, and the last dimension corresponds to polar angles $\theta$ and azimuthal angles $\phi$. The camera-conditioned radial distances are represented by a tensor R of dimensions $H \times W$.

The neural network 100 then outputs a three-dimensional (3D) representation of the scene $O \in R^{H \times W \times 3}$ which is the concatenation of the representation C of the camera Cam and radial distances $R : O = C \parallel R$. Thus, the 3D representation $O$ of the camera Cam is a set of spherical coordinates: polar angle, azimuthal angle, and radial distance, i.e. $(\theta, \phi, r)$.

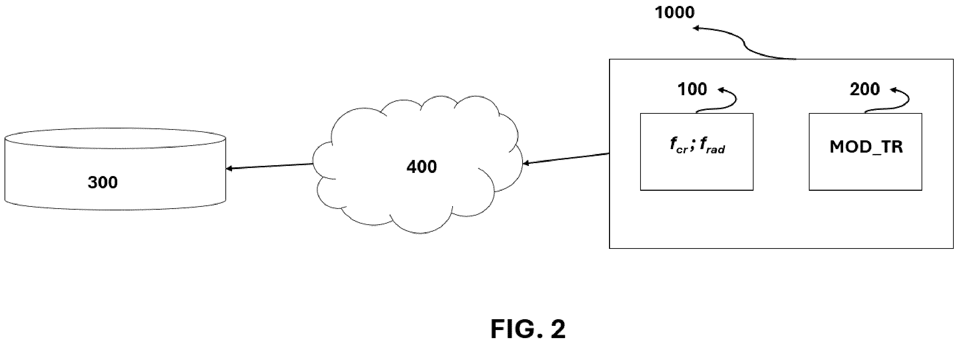

**Figure 2** illustrates a particular implementation of a system 1000 according to the invention.

As illustrated by Figure 2, the system 1000 comprises:

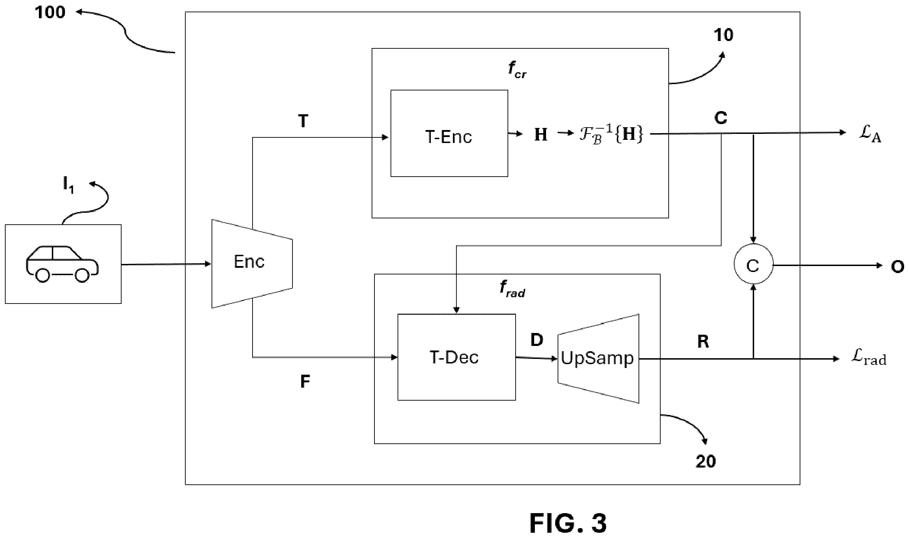

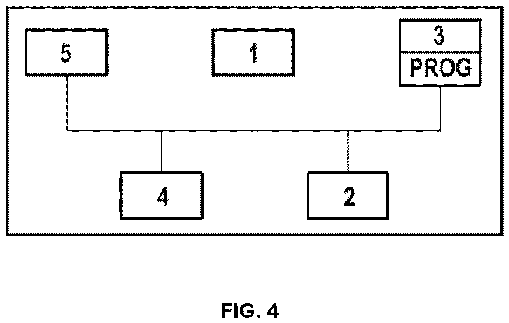

- the neural network 100 implementing a first function $f_{cr}$ and a second function $f_{rad}$. This neural network 100 is configured to output a 3D representation of a scene $O \in R^{H \times W \times 3}$. It takes as input a first image $I_1$ of the scene. The functionalities of that neural network are further detailed with respect to Figure 3;
- a module 200 (MOD_TR) configured for jointly training the neural network 100. The functionalities of that module are further detailed with respect to Figure 4.

As illustrated by Figure 2, the system 1000 is connected to a database 300 storing a plurality of training datasets $T_i$, each training set comprising an image of a same scene $I_i$.

The system 1000 and the database 300 may be connected using a wired or wireless connection, via a telecommunication network 400.

**Figure 3** illustrates an example of the neural network 100 of the system illustrated by Figure 2. Of course, other implementations of the neural network 100 can be envisioned as long as they enable the execution of the first function $f_{cr}$ and the second function $f_{rad}$.

The neural network 100 comprises an encoder Enc having a first output and a second output. The first output of the encoder Enc feeds a first module 10 configured to execute the first function $f_{cr}$ and the second output of the encoder Enc feeds a second module 20 configured to execute the second function $f_{rad}$. This first module 10 and this second module 20 can be software modules, hardware modules or a combination of both software and hardware.

An encoder is a module configured to transform input data, such as the image $I_1$, into a different representation or encoding. This encoding is often of lower dimensionality and is designed to capture important features or patterns in the input data. As an example, in an implementation of the invention, the encoder Enc is a ViT (Vision Transformer) encoder. As the modules 10 and 20, the encoder Enc 20 can be software modules, hardware modules or a combination of both software and hardware.

The first module 10 of the neural network 100 comprises a transformer-encoder T-Enc which processes the data T outputted by the encoder Enc though its first output. A transformer-encoder is configured to process input data and generate meaningful representations. A transformer-encoder consists of multiple stacked layers that process input embeddings using, for example, self-attention and feed-forward networks. The input, which can take the form of image patches or tokens, is converted into a fixed-size vector through embedding. This mechanism allows each token to attend to every other token in the input. It also computes attention weights using query (Q), key (K), and value (V) matrices, enabling the model to focus on the most relevant features.

The second module 20 of the neural network 100 comprises a transformer-decoder T-Dec which output feeds an up-sampler UpSamp. The transformer-decoder T-Dec processes the data F outputted by the encoder Enc though its second output as well as the output of the first module 10. More particularly, a stop-gradient is applied to the output of the first module in order to condition the second module 20.

A transformer-decoder is configured to transform input embeddings into an output sequence. An up-sampler is configured to increase the resolution or dimensionality of input data.

The output of the first module 10 and the output of the second module are then concatenated and transformed in order to generate the 3D representation of a scene $O$.

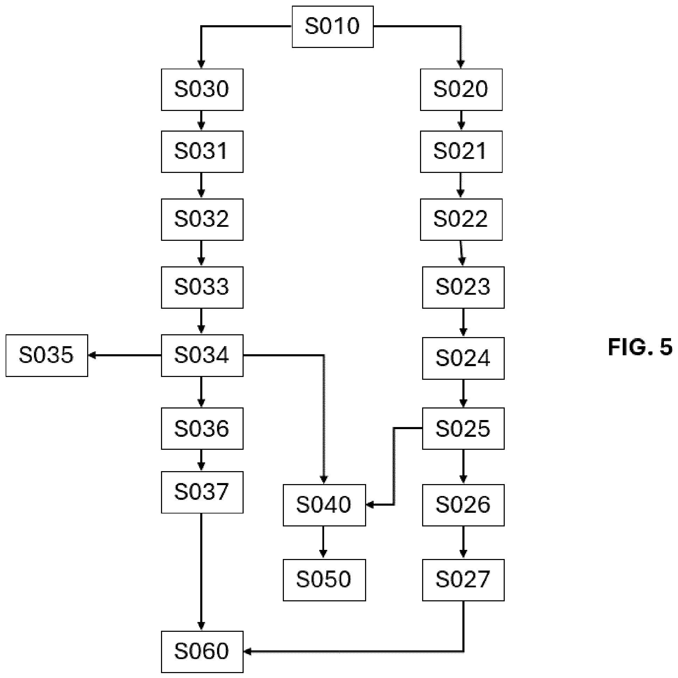

The functioning of this neural network 100 and of its component will be discussed in more details in reference to figure 5.

**Figure 4** illustrates an example of the hardware architecture of the system 1000 illustrated by Figure 2.

To this end, the system 1000 has the hardware architecture of a computer. As shown in Figure 4, the system comprises a processor 1. Although illustrated as a single processor 1, two or more processors can be used according to particular needs, desires, or particular implementations of the system 1000. Generally, the processor 1 executes instructions and manipulates data to perform the operations of the system and any algorithms, methods, functions, processes, flows, and procedures as described in the present disclosure.

The system 1000 also comprises communication means 5 which are used by the system for communicating with another electronic device that is communicatively linked to that system 1000, for example for connecting the database 300. Generally, the communication means 5 are operable to communicate with a radio network, such as the telecommunication network 400, and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated system.

Although illustrated as a single communication means 5 in Figure 4, two or more communication means can be used according to particular needs, desires, or particular implementations of the system. The system also comprises a random-access memory 2, a read-only memory 3, and a non-volatile memory 4.

The non-volatile memory 4 of the system stores the neural network 100 implementing the functions $f_{cr}$ and $f_{rad}$. The non-volatile memory 4 of the system also constitutes a recording medium conforming to the invention, which is readable by processor 1 and on which is recorded a computer program PROG conforming to the invention, containing instructions for carrying out the steps of the method for training a neural network according to the invention. The program PROG defines functional modules of the system, which are based on or control the aforementioned elements 1 to 5 of the system, and which comprise in particular a module including the neural network 100, and a training module configured to train the neural network 100. The training is applied by setting weights of the neural network 100, so as to minimize a final loss. Such a final loss will be discussed more thoroughly in reference to figure 5;

The different functional modules described above can be part of a single electronic device or can be distributed in

a plurality of electronic devices belonging to that system 1000.

**Figure 5** is a flowchart of a training method according to a particular implementation of the invention in which a neural network 100 is trained for predicting a representation of the camera used to acquire a scene, and based on this representation, for predicting a 3D representation of a scene from a single image of said scene.

More particularly, based on a single image of a given scene, the trained neural network determines a representation of the camera used to acquire this image. This representation of the camera, called angular representation, is a representation of the pencil of rays of the camera. As shown on Figure 5, the method for training a neural network 100 to determine a 3D representation of a scene comprises a first step S010 of inputting a single image $I_1$ of a scene. More particularly, this single image $I_1$ is inputted in the encoder Enc of the neural network 100.

In an implementation of the method according to the invention, the encoder Enc is a ViT encoder. ViT encoders were originally developed for classification tasks. In order to adapt the backbone of this encoder for the purpose of the invention, he final three layers of the encoder Enc, i.e. the pooling layer, the fully connected layer, and the softmax layer, are removed. Of course, the invention is not limited to this example and encoders other than ViT encoders can be used to implement the method according to the invention, such as ResNet (Residual Network) or any Convolutional Neural Network (CNN).

The encoder Enc then extracts class tokens (step S020) and a feature map F (step S030).

When the encoder Enc is a ViT encoder, the class tokens T and the feature map F are extracted from the last four layers of the modified ViT backbone.

Once these outputs, i.e. the class tokens and the feature map, are flattened and processed using for example a method called LayerNorm ["Layer normalization", 2016, Lei Ba J. *et al.*], a linear projection layer is applied to the data. The linear layer maps the features and class tokens to a common channel dimension d, which can be set to 512, 384, and 256 for Large, Base, and Small ViT variants, respectively. The normalization and linear layer weights are distinct and are not shared between the different feature resolutions and the class tokens.

In the example of implementation discuss hereafter, four class tokens T are extracted by the encoder Enc and fed to the first module 10. Of course, any number of class tokens T can be extracted by the encoder Enc, this number can be lower than four or greater than four.

The four class tokens extracted from the encoder Enc are then projected to dimensions of *3D, 3D, 5D,* and *7D,* respectively (S021). These projections are then divided into chunks based on the channel dimension d, yielding token groups of size 3,3,5, and 7.

These token groups serve as the initialization for domain tokens which represent spherical harmonics coefficients: 1st-degree, 2nd-degree, and 3rd-degree, respectively, of a spherical harmonics function. Thus, the encoder Enc generates 18 tokens grouped in a tensor T representing the 18 coefficients of this spherical harmonics function from image $I_1$.

Spherical harmonics are mathematical functions defined on the surface of a sphere. Modeling the camera rays of the camera Cam used to acquire image $I_1$ as a decomposition across a finite spherical harmonics basis ensures an accurate and compact representation of the pencil of rays of the camera Cam which can be used to obtain an accurate 3D representation of the scene.

The spherical harmonics functions may be, for example, Legendre polynomials. Such spherical harmonics functions are, for example, defined by four parameters: the generalised principal point, which corresponds to the poles of a spherical harmonic, as well as the horizontal and vertical fields of view of the camera Cam.

In a step S022, the tokens T are transmitted to the transformer-encoder T-Enc of the first module 10 in order to determine a representation of the pencil of rays of the camera Cam used to acquire image $I_1$.

The tokens T are then processed (S023) by the transformer-encoder T-Enc. In an implementation of the invention, the transformer-encoder T-Enc comprises two layers. In this implementation, each layer of the transformer-encoder T-Enc is a self-attention layer with eight heads and a Multi-Layer Perceptron (MLP) that has a single hidden layer of dimension 4C and uses the Gaussian Error Linear Unit (GELU) activation function. Both the self-attention layer and the MLP layer include residual connections to improve learning stability.

More particularly, each of the 18 tokens T is projected to a scalar dimension. The first three tokens define the domain for the spherical harmonics function. The first token determines the horizontal field of view (HFov) of the camera Cam, calculated as $2\pi \cdot \sigma(T_0)$, where $\sigma$ denotes the sigmoid function. The second and third tokens represent the poles of the different spherical harmonics of the spherical harmonics function , i.e. the center of projection relative to the image shape which is defined by the width and height of the image, computed as $c_x = \frac{\sigma(T_1)W}{2}$ and $c_y = \frac{\sigma(T_2)H}{2}$, respectively, where H and $W$ are the height and the width of the image $I_1$. The vertical field of view the camera Cam is derived from the horizontal field of view under the assumption that the pixels of the camera Cam are square pixels:

$$\mathrm{HFov} \times \frac{H}{W}.$$

Once those tokens T are processed by the transformer-decoder T-Enc, and after the constant component, i.e. the lowest-degree ($l$= 0) is excluded, a tensor $H \in R^{H \times W \times 3}$, where the last dimension correspond to the poles and an horizontal field of view of a spherical harmonic, comprising the 15 harmonics coefficient is obtained (S024).

The angular representation C is then determined (S025) by the first module 10 as follows:

$$C = F_B^{-1}\{H\} = \sum_{l=0}^{L} \sum_{m=-l}^{l} H_{lm} B_{lm}(\theta, \phi)$$

where $F_B^{-1}$ denotes the inverse spherical transform using the spherical harmonics functions $B$, $l$ is the degree of the spherical harmonics, m is the order of the spherical harmonics, $\theta$ is a value of a polar angle and $\phi$ is a value of an azimuthal angle in a spherical coordinate system centered on the optical center of the camera Cam.

Such a representation C of the camera Cam, called angular representation, is a representation of the pencil of rays of the camera, the viewing direction of each ray of the camera Cam being given by a couple ($\theta$, $\phi$).

Neural networks tend to regress towards the most frequent modes in the training data, often neglecting the distribution tails. Since most training datasets are heavily skewed towards small field of view cameras, such as pinhole cameras, there is a risk that the representation of the camera outputted by the first module 10 is biased. To overcome this issue, an asymmetric angular loss based on quantile regression is determined (S026) by the neural network 100 for both the polar angle $\theta$ and the azimuthal angle $\phi$.

Such an asymmetric angular loss is defined as follows for the polar angle $\theta$:

$$L_{AA}^{\alpha}(\acute{\theta}, \theta) = \alpha \sum_{\acute{\theta} > \theta} |\acute{\theta} - \theta| + (1 - \alpha) \sum_{\acute{\theta} \leq \theta} |\acute{\theta} - \theta|,$$

and as follows for the azimuthal angle $\phi$:

$$L_{AA}^{\alpha}(\acute{\phi}, \phi) = \alpha \sum_{\acute{\phi} > \phi} |\acute{\phi} - \phi| + (1 - \alpha) \sum_{\acute{\phi} \leq \phi} |\acute{\phi} - \phi|$$

where $0 \leq \alpha \leq 1$ is the target quantile, $(\acute{\cdot})$ is the predicted angle, and $(\cdot)$ is the ground-truth angle. This formulation adjusts the weighting of overestimation and underestimation of the polar angle $\theta$ or the azimuthal angle $\phi$. When $\alpha$ = 0.5, the loss degenerates to the standard Mean Absolute Error (MAE), but by tuning $\alpha$, one can emphasize underrepresented angles and balance the regression more effectively. Furthermore, using quantile regression enable to reduce the complexity to a simple search over the interval [0,1] for $\alpha$, making the method according to the invention well-suited for large-scale and diverse training scenarios. while allowing to address the angular distribution bias without sacrificing simplicity and diversity, making it a robust and scalable solution.

In a particular implementation, $\alpha$ = 0.7 for the polar angle and $\alpha$ = 0.5 for the azimuthal angle. It should be noted that $\alpha$ can take any other value as long as the corresponding computation requirement allows the model to be deployable on the utilized medium.

The final angular loss $L_A$ can be expressed (S027) as:

$$L_A(\acute{C}, C) = \beta L_{AA}^{0.7}(\acute{\theta}, \theta) + (1 - \beta) L_{AA}^{0.5}(\acute{\phi}, \phi)$$

with $(\acute{\cdot})$ and $(\cdot)$ serving as prediction and GT identifiers, respectively, and $\beta$ = 0.75. It is worth noting that $L_{AA}^{0.5}$ corresponds to the standard, symmetric L1-loss, as the azimuthal dimension $\phi$ with regard to. the principal point is not affected by prediction contraction.

Back to step S030, the feature map F determined by the encoder Enc from the single image $I_1$ is a tensor $F \in$

$R^{h \times w \times c \times 4}$ pertaining to the pixels of image $I_1$ where $(h, w) = \left(\frac{H}{x}, \frac{W}{x}\right)$. In order to reduce the number of computations and the memory consumption of the neural network 100, the size of the feature map F is reduced. Thus, H/x,W/x means the feature map is one x[th] of the size of the image acquired by camera Cam.

In the continuation of the document, x has a value of 14. It should be noted that x can take any other value as long as the corresponding computation requirement allows the model to be deployable on the utilized medium.

The feature map F is then transmitted by the encoder Enc to a first input of the transformer-decoder T-Dec of the second module 20 (S031). In the meantime, the angular representation C of the camera Cam obtained by the first module 10 during step S025 is transmitted (S032) to a second input of the transformer-decoder T-Dec. The transformer-decoder T-Dec comprises, for example, 4 parallel layers, one for each resolution, and one head. By resolution it is meant the « level » of the processing layer of the encoder from which features are extracted. For example, for an encoder having 24 processing layers, if four resolutions are extracted, it means the outputs are extracted from processing layers 6,12,18 and 24.

These 4 layers of the transformer-decoder T-Dec condition the feature map F on the sine-encoded angular representation C of the camera Cam.

As such, the feature map F serve as the query Q, while the sine-encoded angular representation C provides the keys K and the values V of the cross-attention mechanism.

The conditioned feature map is then projected (S033) onto a 512-channel tensor, forming radial features $D \in R^{h \times w \times 512}$. These radial features $D$ are transmitted (S034) to the up-sampler UpSamp where they are up-sampled to the input resolution using residual convolutional blocks and learnable up-sampling techniques, such as for example bilinear up-sampling followed by a single 1 × 1 convolution.

The up-sampler UpSamp outputs logarithmic values of the radial distances for each of the rays of the camera Cam. These logarithmic values are stored in a tensor $R_{\log} \in R^{H \times W}$ referred to as the log-radius.

The same projection, architectural-wise but with different weights, is used by the up-sample UpSamp to generate (S035) the log-confidence $\Sigma_{log}$. The final values of the radial distances, stored in a tensor F, and confidence values $\Sigma$ are obtained by exponentiating the tensors $R_{\log}$ and $\Sigma_{log}$ element-wise, transforming them from log-space to the original space, i.e. the coordinate system of the camera Cam.

More particularly, the confidence map $\Sigma$ is predicted (S036) for the radial distances R by including a second projection head fed with up-sampled radial features $D$ determined by the up-sampler UpSamp, besides a first head of the second module 20 which computes $R_{\log}$.

The second module 20 then computes (S037) a radial loss $L_{\text{rad}}$. The radial loss $L_{\text{rad}}$ is the L1-loss between the values of $R_{\log}$ predicted by the second module 20 and the ground truth values of $R_{\log}$ obtained by a ground truth camera for which a depth map is available. L1 is a type of loss that is calculated as follows. For each pixel of an image the difference between the prediction and the ground truth is calculated. Then the mean of the computed absolute-value error over all pixels is computed giving L1.

The radial loss $L_{rad}$ is defined as follows:

$$L_{\text{rad}} = \left\| \acute{R}_{\log} - R_{\log} \right\|_1 .$$

Finally, the second module 20 computes (S038) a confidence loss $L_{\text{conf}}$. This confidence loss $L_{\text{conf}}$ is the L1-loss between the detached radial loss and the inverse predicted confidence, Σ.

The confidence loss $L_{\text{conf}}$ is defined as follows: :

$$L_{\text{conf}} = \left\| \left| \acute{R}_{log} - R_{log} \right| - \Sigma \right\|_1 .$$

In the meantime, the final 3D spherical output $O = C \| R$ is obtained (S040) by concatenating and transforming the angular representation C obtained by the first module 10 in step S025 and the radial distances R obtained by the second module 20 during step S034.

The final 3D spherical output $O$ is then converted (S050) to a Cartesian point cloud $O \in R^{H \times W \times 3}$ using a spherical-toCartesian coordinate transformation.

The method for training the neural network 100 further comprises a step S060 comprising of minimizing a final loss function given by:

$$L_A + \eta L_{\mathrm{rad}} + \gamma L_{\mathrm{conf}}, \text{ with } \eta = 2 \text{ and } \gamma = 0.1$$

This final loss is a linear combination of the three losses: $L_A$, $L_{\mathrm{rad}} \wedge L_{conf}$ ,.

Table 1 records an example of the training hyperparameters used to train the neural network 100 according to the training method of the invention. During the training of the neural network 100 the values of these hyperparameters are modified in order to minimize the final loss.

Table 1

| Hyperparameter | Value |
|---|---|
| Steps | 250 k |
| Batch Size | 128 |
| LR | $5 \cdot 10^{-5}$ |
| LR Encoder | $5 \cdot 10^{-6}$ |
| Optimizer | AdamW [34] |
| $(\beta_1, \beta_2)$ | (0.9,0.999) |
| Weight Decay | 0.1 |
| Gradient Clip Norm | 1.0 |
| Precision | 16 -bit Float |
| LR Scheduler | Cosine to 0.1 start after 75 k iters |
| EMA | 0.9995 start after 75 k iters |
| Color jitter prob | 80% |
| Color jitter intensity | [0.0,0.4] |
| Gamma prob | 80% |
| Gamma intensity | [0.8,1.2] |
| Horizontal flip prob | 50% |
| Greyscale prob | 20% |
| Gaussian blur prob | 20% |
| Gaussian blur sigma | [0.1,2.0] |
| Random zoom | [0.67,1.5] |
| Random translation | [-0.05,0.05] |
| Image ratio | [9: 16,2: 1] |
| Resolution | 0.30 MP [0.23*MP*, 0.51*MP*] last 50 k iters |

Table 2 compares different output representations for the third dimension of the predicted space: either the Cartesian z-axis (rows 1 and 3 of table 2) or the spherical radius, i.e. the radial distance (rows 2 and 4 of table 2). The results show that using the radius representation improves reconstruction metrics in Pano and L.FoV settings, as depth is less effective when dealing with cameras having fields of views near or exceeding 180 degrees. This improvement is realized only when the radial component is paired with a camera model capable of representing a wide range of geometries, e.g. our spherical harmonic-based model (row 4 vs. row 2 of table 2). However, the radius-based output space leads to poorer reconstruction for S.FoV with distortion (row 3 vs. row 4 of table 2). This degradation occurs because the radius representation is more sensitive to minor angular variations, which disproportionately impacts accuracy in small but highly distorted views.

Here, Pano stands for panoramic, i.e. cameras having a horizontal field of view FoV at 360°, also called Equirectangular., and L.FoV stands for large FoV, i.e. cameras having FoV between 120° and 180° with inherent typical distortion of lenses with such large FoV (i.e. Fisheye effect). S.FoV stands for small FoV, and concerns cameras having FoV between 30° and 90° without any distortion. Finally, SfoV(Dist) stands for small FoV but with peripheral distortion that should simulate the lenses distortion typical of L.Fov.

Table 2

| Mode | | | S.FoV | | S.FoV | | | | | |
|---|---|---|---|---|---|---|---|---|---|---|
| 1 | Output | | $F_A$ ↑ | $\rho_A$ ↑ | $F_A$ ↑ | $\rho_A$ ↑ | $F_A$ ↑ | $\rho_A$ ↑ | $F_A$ ↑ | $\rho_A$ ↑ |
| 1 | Pinhol e | depth | 56. 1 | 81.1 | 40. 4 | 58.2 | 44. 9 | 43.1 | 5.9 | 3.0 |
| 2 | Pinhol e | radius | 56. 0 | 81.1 | 39. 5 | 57.6 | 44. 4 | 48.9 | 10. 1 | 4.9 |
| 3 | SH | depth | 56. 2 | 79.4 | 42. 1 | 62.7 | 48. 5 | 60.8 | 10. 9 | 14. 8 |
| 4 | SH | radius | 56. 8 | 76.7 | 35. 0 | 43.7 | 51. 8 | 61.1 | 53. 8 | 22. 0 |

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

**1.** A computer implemented method for training a neural network for generating a representation of a camera the method comprising:
inputting one image of a scene acquired by said camera to the neural network, said neural network being configured to determine an angular representation of a bundle of straight lines passing through an optical center of the camera, each straight line representing a viewing direction of a pixel of the camera.

**2.** The training method according to claim 1, wherein the angular representation is obtained by applying an inverse spherical transform defined by a finite basis of spherical harmonics on data representative of said one image determined by the neural network.

**3.** The training method according to claim 2, wherein the angular representation C is defined as:

$$C = F_B^{-1}\{H\} = \sum_{l=0}^{L} \sum_{m=-l}^{l} H_{lm} B_{lm}(\theta, \phi)$$

where $F_B^{-1}$ denotes the inverse spherical transform using the spherical harmonics functions *B*, $H \in R^{H \times W \times 3}$ is a tensor where *H* and *W* are respectively the height and width said one image, and the last dimension correspond to the poles and an horizontal field of view of a spherical harmonic, *l* is the degree of the spherical harmonics, m is the order of the spherical harmonics, $\theta$ is a value of a polar angle and $\phi$ is a value of an azimuthal angle in a spherical coordinate system centered on the optical center of the camera.

**4.** The training method according to any of claims 1 to 3, further comprising a determination of a three-dimensional (3D) representation of the scene based on:

said angular representation of the camera and,
a determination of a bundle of radial distances by the neural network from said angular representation of the camera and said one image, each radial distance separating an optical center of said camera from an intersection of a straight line of a bundle of straight lines passing through said optical center, each straight line representing a viewing direction of a pixel of said camera, and an object of the scene.

**5.** The training method according to claim 4, further comprising minimizing a final loss which is a difference between said 3D representation of the scene and a ground truth 3D representation of the scene.

**6.** The training method according to any of claims 4 to 5, wherein the radial distances are determined by conditioning a dense feature map F, determined by the neural network from said one image, with said angular representation.

**7.** The training method according to claim 6, wherein when conditioning the dense feature map F, a static-encoding is applied to the angular representation.

**8.** The training method according to any of claims 5 to 7, wherein determining the 3D representation of the scene comprises determining for the pixels of said one image, in a spherical coordinate system centered on the optical center of the camera, a polar angle $\theta$, an azimuthal angle $\phi$ and a radial distance r.

**9.** The training method according to claim 8, wherein determining the 3D representation of the scene comprises obtaining a 3D point cloud $O \in R^{H \times W \times 3}$ by converting the spherical coordinates of the pixels of said one image to Cartesian coordinates.

**10.** The training method according to any of claims 5 to 9, wherein the final loss is a linear combination of an angular loss $L_A$, a radial loss $L_{rad}$ and a confidence loss $L_{conf}$.

**11.** The training method according to claim 10, wherein the angular loss $L_A$ is defined as:

$$L_A(\hat{C}, C) = \beta L_{AA}^{0.7}(\hat{\theta}, \theta) + (1-\beta) L_{AA}^{0.5}(\hat{\phi}, \phi)$$

where $(\hat{\cdot})$ and $(\cdot)$ represent respectively the values predicted by the neural network and the ground-truth values, and $\beta$ = 0.75.

**12.** The training method according to claim 10, wherein the radial loss $L_{rad}$ is defined as:

$$L_{rad} = \left\|\hat{R}_{log} - R_{log}\right\|_1$$

where $(\hat{\cdot})$ and $(\cdot)$ represent respectively the values predicted by the neural network and the ground-truth values.

**13.** The training method according to claim 10, wherein the confidence loss $L_{conf}$ is defined as:

$$L_{conf} = \left\|\left|\hat{R}_{log} - R_{log}\right| - \Sigma\right\|_1$$

where $(\hat{\cdot})$ and $(\cdot)$ represent respectively the values predicted by the neural network and the ground-truth values and $\Sigma$ is the inverse predicted confidence.

**14.** A neural network trained by the method according to any one of claims 1 to 13.

**15.** A system for training a neural network for training a neural network for generating a representation of a camera, the system comprising:

- a neural network being configured to:

  • obtain one image of the scene acquired by a camera;
  • determine an angular representation, determined by the neural network from said one image, of a bundle of straight lines passing through an optical center of the camera, each straight line representing a viewing direction of a pixel of the camera.

**16.** A system comprising the neural network according to claim 15.

**17.** A vehicle comprising the system according to claim 16.

**18.** A computer program set including instructions for executing the steps of the method of any one of claims 1 to 13 when said program set is executed by at least one computer.

**19.** A recording medium readable by at least one computer and having recorded thereon at least one computer program including instructions for executing the steps of the method of any one of claims 1 to 13.

**Amended claims in accordance with Rule 137(2) EPC.**

1. A computer implemented method for training a neural network (100) for generating a representation of a camera (Cam) the method comprising inputting one image ($I_1$) of a scene acquired by said camera (Cam) to the neural network (100), **characterized in that** said neural network (100) is configured to:

   - determine coefficients of spherical harmonics from said one image ($I_1$) , and
   - generate an angular representation ($C$) of a bundle of straight lines passing through an optical center of the camera (Cam) by applying an inverse spherical transform to said determined coefficients, each straight line representing a viewing direction of a pixel of the camera (Cam).

2. The training method according to claim 1, wherein the angular representation ($C$) is obtained by applying an inverse spherical transform defined by a finite basis of spherical harmonics on data representative of said one image ($I_1$) determined by the neural network (100).

3. The training method according to claim 2, wherein the angular representation ($C$) is defined as:

$$C = F_B^{-1}\{H\} = \sum_{l=0}^{L} \sum_{m=-l}^{l} H_{lm} B_{lm}(\theta, \phi)$$

   where $F_B^{-1}$ denotes the inverse spherical transform using the spherical harmonics functions $B$, $H \in R^{H\times W\times 3}$ is a tensor where $H$ and $W$ are respectively the height and width said one image ($I_1$) , and the last dimension of the tensor H represents parameters of the spherical harmonic, said parameters comprising the poles and an horizontal field of view of a spherical harmonic, $l$ is the degree of the spherical harmonics, $m$ is the order of the spherical harmonics, $\theta$ is a value of a polar angle and $\phi$ is a value of an azimuthal angle in a spherical coordinate system centered on the optical center of the camera (Cam).

4. The training method according to any of claims 1 to 3, further comprising a determination of a three-dimensional (3D) representation of the scene based on:

   said angular representation ($C$) of the camera (Cam) and,
   a determination of a bundle of radial distances by the neural network (100) from said angular representation ($C$) of the camera (Cam) and said one image ($I_1$) , each radial distance separating an optical center of said camera (Cam) from an intersection of a straight line of a bundle of straight lines passing through said optical center, each straight line representing a viewing direction of a pixel of said camera (Cam), and an object of the scene.

5. The training method according to claim 4, further comprising minimizing a final loss which is a difference between said 3D representation of the scene and a ground truth 3D representation of the scene.

6. The training method according to any of claims 4 to 5, wherein the radial distances are determined by conditioning a dense feature map $F$, determined by the neural network (100) from said one image ($I_1$) , with said angular representation ($C$).

7. The training method according to claim 6, wherein when conditioning the dense feature map $F$, a sine-encoding is applied to the angular representation ($C$).

8. The training method according to any of claims 5 to 7, wherein determining the 3D representation of the scene comprises determining, for the pixels of said one image ($I_1$) , in a spherical coordinate system centered on the optical center of the camera (Cam), a polar angle $\theta$, an azimuthal angle $\phi$ and a radial distance $r$.

9. The training method according to claim 8, wherein determining the 3D representation of the scene comprises obtaining a 3D point cloud $O \in R^{H\times W\times 3}$ by converting the spherical coordinates of the pixels of said one image ($I_1$) to Cartesian coordinates.

10. The training method according to any of claims 5 to 9, wherein the final loss is a linear combination of an angular loss

$L_A$, a radial loss $L_{rad}$ and a confidence loss$L_{conf}$ defined as:

$$L_{conf} = \left\| \left| \hat{R}_{log} - R_{log} \right| - \Sigma \right\|_1$$

where $(\hat{\cdot})$ and $(\cdot)$ represent respectively the values predicted by the neural network (100) and the ground-truth values and $\Sigma$ is the inverse predicted confidence.

**11.** The training method according to claim 10, wherein the angular loss$L_A$ is defined as:

$$L_A(\hat{C}, C \quad) = \beta L_{AA}^{0.7}(\hat{\theta}, \theta \quad) + (1 - \beta) L_{AA}^{0.5}(\hat{\phi}, \phi \quad)$$

where $(\hat{\cdot})$ and $(\cdot)$ represent respectively the values predicted by the neural network (100) and the ground-truth values, and $\beta$ = 0.75.

**12.** The training method according to claim 10, wherein the radial loss $L_{rad}$ is defined as:

$$L_{rad} = \left\| \hat{R}_{log} - R_{log} \right\|_1$$

where $(\hat{\cdot})$ and $(\cdot)$ represent respectively the values predicted by the neural network (100) and the ground-truth values.

**13.** A neural network trained by the method according to any one of claims 1 to 12.

**14.** A system for training a neural network for training a neural network (100) for generating a representation of a camera (Cam), **characterized in that** the system comprises:

- a neural network (100) being configured to:

  • obtain one image ($I_1$) of the scene acquired by a camera (Cam);
  • determine coefficients of spherical harmonics from said one image ($I_1$) , and
  • generate an angular representation ($C$) of a bundle of straight lines passing through an optical center of the camera (Cam) by applying an inverse spherical transform to said determined coefficients, each straight line representing a viewing direction of a pixel of the camera (Cam).

**15.** A system comprising the neural network (100) according to claim 14.

**16.** A vehicle comprising the system according to claim 15.

**17.** A computer program set including instructions for executing the steps of the method of any one of claims 1 to 12 when said program set is executed by at least one computer.

**18.** A recording medium readable by at least one computer and having recorded thereon at least one computer program including instructions for executing the steps of the method of any one of claims 1 to 12.

$I_1$
100
$f_{cr}$ ; $f_{rad}$
O

FIG. 1

1000
100
$f_{cr}$ ; $f_{rad}$
200
MOD_TR
400
300

FIG. 2

100
$I_1$
Enc
T
F
10
$f_{cr}$
T-Enc
H → $\mathcal{F}_B^{-1}\{\mathbf{H}\}$
C
20
$f_{rad}$
T-Dec
D
UpSamp
R
C
$\mathcal{L}_A$
O
$\mathcal{L}_{rad}$

FIG. 3

5
1
3
PROG
4
2

FIG. 4

S010
S030
S020
S031
S021
S032
S022
S033
S023
S035
S034
S024
S036
S025
S037
S040
S026
S050
S027
S060

FIG. 5

Europäisches
Patentamt
European
Patent Office
Office européen
des brevets

# EUROPEAN SEARCH REPORT

Application Number
EP 25 15 9717

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUIGI PICCINELLI ET AL: "UniDepth: Universal Monocular Metric Depth Estimation", ARXIV.ORG, CORNELL UNIVERSITY LIBRARY, 201 OLIN LIBRARY CORNELL UNIVERSITY ITHACA, NY 14853, 27 March 2024 (2024-03-27), XP091712979, | 1-6,8,9, 14-19 | INV. G06T7/50 G06T7/80 |
| A | * See Written Opinion * | 7,10-13 | |
| | ----- | | |

| TECHNICAL FIELDS SEARCHED (IPC) |
|---|
| G06T |

The present search report has been drawn up for all claims

| Place of search | Date of completion of the search | Examiner |
|---|---|---|
| Munich | 31 July 2025 | Nicolau, Stephane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **LEI BA J.** *Layer normalization*, 2016